# EUROPÄISCHE PATENTSCHRIFT

(11) **EP 0 749 874 B1**
(45) Veröffentlichungstag und Bekanntmachung des Hinweises auf die Patenterteilung: **02.09.1998**
(21) Anmeldenummer: 96109713.6
(22) Anmeldetag: 17.06.1996
(51) Int. Cl.: B60R 22/24

(54) **Umlenkbeschlag für Sicherheitsgurte**
Deflecting fitting for seat belts
Ferrure de renvoi pour ceintures de sécurité

(30) Priorität: 21.06.1995 DE 29510050 U
(43) Veröffentlichungstag der Anmeldung: 27.12.1996
(73) Patentinhaber: TRW Occupant Restraint Systems GmbH & Co. KG, 73551 Alfdorf (DE)
(72) Erfinder: Möndel, Karl, 73529 Schwäbisch Gmünd (DE)
(74) Vertreter: Degwert, Hartmut, Dipl.-Phys.

(56) Entgegenhaltungen:
- FR-A- 2 423 235
- FR-A- 2 507 901
- GB-A- 2 002 223
- US-A- 5 415 433

## Beschreibung

Die Erfindung betrifft einen Umlenkbeschlag für Sicherheitsgurte, mit einem Bügel, der zwei parallele Schenkel aufweist, zwischen denen sich ein Bolzen erstreckt, auf dem eine Rolle durch an ihren axialen Enden angeordnete Wälzlager drehbar gelagert ist.

Ein solcher Umlenkbeschlag ist beispielsweise aus dem deutschen Gebrauchsmuster 295 02 192 bekannt. Die mit Wälzlagern auf dem Bolzen gelagerte Rolle weist im Vergleich zu Umlenkbeschlägen mit Gleitreibung zwischen der Rolle und dem Bolzen wesentlich geringere Reibungsverluste bei einer Drehung der Rolle relativ zu dem Beizen auf, weshalb die Aufwickelfeder eines zugehörigen Gurtaufrollers schwächer dimensioniert werden kann. Dies steigert den Tragekomfort für den Benutzer des Sicherheitsgurtes. Bei einem solchen Umlenkbeschlag können aber die bereits im normalen Betrieb bei einer Blockierung des Gurtaufrollers auftretenden Belastungen, beispielsweise beim scharfen Bremsen des Fahrzeugs, zu einer plastischen Verformung der Rolle oder einem vorzeitigen Verschleiß ihrer Lagerung führen, was die Leichtgängigkeit der Rolle beeinträchtigt.

Aufgabe der Erfindung ist es, bei einem Umlenkbeschlag der eingangs genannten Art einer plastischen Verformung der Rolle vorzubeugen und ihre Lagerung zu entlasten, so daß die Leichtgängigkeit der Rolle über die gesamte Betriebslebensdauer des Umlenkbeschlages erhalten bleibt.

Gemaß der Erfindung wird diese Aufgabe bei einem Umlenkbeschlag der eingangs genannten Art dadurch gelöst, daß die Rolle zwischen den Wälzlagern wenigstens eine durch eine vergrößerte Wandstärke gebildete, einwärts gerichtete Stützstruktur aufweist. Durch diese Gestaltung kommt es bei einer Belastung der Rolle, wie sie bei blockiertem Gurtaufroller auftreten kann, nur zu einer elastischen Verformung der Rolle, durch welche die Stützstruktur in Anlage an den Bolzen gelangt und eine weitere Verformung der Rolle verhindert. Dies beugt zum einen einer dauerhaften Verformung der Rolle vor, und zum anderen werden die Wälzlager entlastet, da ein Teil der Belastung der Rolle direkt von der Stützstruktur auf den Bolzen übertragen wird.

Gemäß einer bevorzugten Ausführungsform der Erfindung ist vorgesehen, daß der Innendurchmesser der Rolle von den Wälzlagern zu der Stützstruktur hin im wesentlichen kontinuierlich abnimmt. Durch diese Gestaltung weist die Rolle eine hohe Bruchfestigkeit auf, wahrend weiterhin eine ausreichende elastische Verformbarkeit unter Last erzielt wird.

Die Erfindung wird nachfolgend anhand von bevorzugten Ausführungsformen unter Bezugnahme auf die beigefügte Zeichnung erläutert. In dieser zeigen:
- Fig. 1 einen Längsschnitt durch einen Umlenkbeschlag gemäß einer ersten Ausführungsform;
- Fig. 2 einen Längsschnitt durch einen Umlenkbeschlag gemäß einer zweiten Ausführungsform; und
- Fig. 3 einen Längsschnitt durch eine Variante des Umlenkbeschlags von Fig. 2.

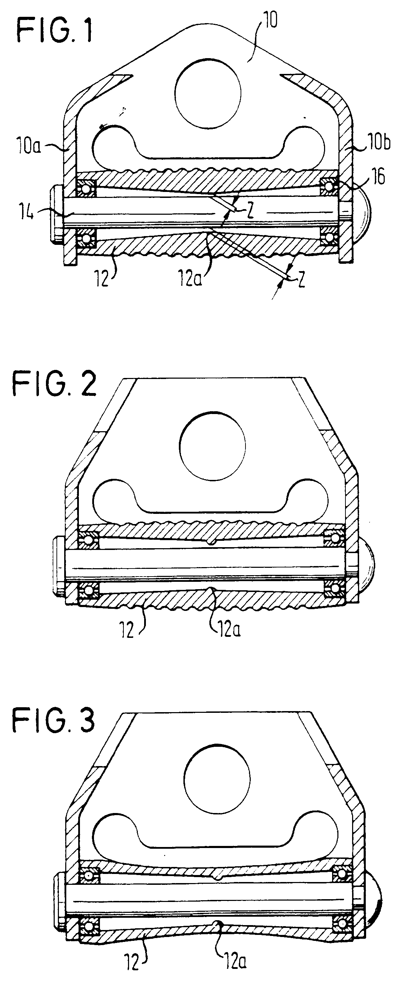

In Fig. 1 ist ein Umlenkbeschlag 10 gemäß einer ersten Ausführungsform dargestellt, der zwischen zwei parallelen Schenkeln 10a, 10b eine Rolle 12 aufweist, die auf einem Bolzen 14 durch zwei Wälzlager 16 drehbar angeordnet ist, die an den axialen Enden der Rolle angeordnet sind. Der Innendurchmesser der Rolle 12 nimmt ausgehend vom Bereich der Wälzlager 16 zu einer Stützstruktur 12a hin kontinuierlich derart ab, daß in der Mitte zwischen den beiden Wälzlagern 16 der Innendurchmesser der Rolle 12 nur geringfügig größer als der Außendurchmesser des Bolzens 14 ist.

Die Funktion dieser Gestaltung ist die folgende: Wenn das Gurtband frei über den Umlenkbeschlag läuft, also der Gurtaufroller nicht blockiert ist und die Gurtbandkraft nur von der Aufwickelfeder des Gurtaufrollers hervorgerufen wird, kann sich die Rolle leichtgängig auf den Walzlagern 16 drehen, da aufgrund des Abstandes Z zwischen der Stützstruktur 12a und dem Außendurchmesser des Bolzens 14 keine zusätzliche Reibung auftritt. Wenn der Gurtaufroller blockiert ist und auf das Gurtband Kräfte einwirken, die erheblich größer sind als im Falle eines nicht blockierten Gurtaufrollers, führt die bei der Umlenkung des Gurtbandes auf die Rolle 12 übertragene Kraft zu einer elastischen Verformung der Rolle, durch welche die Rolle 12 mittels der Stützstruktur 12a an dem Bolzen 14 anliegt. Somit wird über die Stützstruktur 12a ein Teil der auf die Rolle einwirkenden Belastung direkt auf den Bolzen übertragen, und nur der verbleibende Teil der Belastung wird über die Wälzlager 16 auf den Bolzen übertragen.

Diese Gestaltung hat die folgenden Vorteile: Da die Wälzlager 16 bei dem erfindungsgemäßen Umlenkbeschlag geringer belastet werden als bei einem herkömmlichen Umlenkbeschlag, ist die Lebensdauer der Wälzlager höher als bei einem herkömmlichen Umlenkbeschlag, weshalb die Leichtgängigkeit der Lagerung der Rolle während ihrer gesamten Betriebslebensdauer aufrechterhalten bleibt. Durch die geringere Belastung der Wälzlager können diese unter Umständen mit einer geringeren Tragfähigkeit gewählt werden als bei einem herkömmlichen Umlenkbeschlag, wodurch die Leichtgängigkeit der Rolle 12 weiter erhöht wird. Trotz der geringeren Tragfähigkeit der Wälzlager weisen diese eine größere Lebensdauer auf, da bei hohen Belastungen der Rolle ein Teil der Belastung direkt unter Umgehung der Wälzlager auf den Bolzen übertragen wird. Ein besonderer Vorteil dieser Gestaltung der Rolle liegt darin, daß die direkte Abstützung der Rolle mittels der Stutzstruktur 12a an dem Bolzen 14 nur dann wirksam wird, wenn der Gurtaufroller bereits blockiert ist und im wesentlichen keine Bewegung des Gurtbandes relativ zum Umlenkbeschlag mehr auftritt. Wenn der Gurtaufroller dagegen nicht blockiert ist und eine Bewegung des Gurtbandes relativ zum Umlenkbeschlag möglich ist, ist die Rolle auf dem Bolzen ausschließlich wälzgelagert, und die Stützstruktur beeinträchtigt die leichtgängigkeit der Rolle nicht. Ein weiterer Vorteil der Gestaltung liegt schließlich darin, daß durch die kontinuierliche Zunahme der Wanddicke der Rolle zur Mitte hin eine besonders hohe Bruchfestigkeit der Rolle erhalten wird, während gleichzeitig eine elastische Verformung der Rolle unter hoher Last möglich ist. Eine plastische Verformung, welche für die Leichtgängigkeit der Rolle nachteilig wäre, ist dadurch vermieden, daß bei Belastung der Rolle die Stützstruktur in Anlage an den Bolzen gelangt.

In Fig. 2 ist ein Umlenkbeschlag gemäß einer zweiten Ausführungsform der Erfindung dargestellt. Der Unterschied zur ersten Ausführungsform besteht darin, daß die Wandstärke der Rolle 12 mit Ausnahme der Stützstruktur im wesentlichen konstant ist. Die Rolle 12 ist allgemein hülsenförmig. In der Mitte zwischen den Wälzlagern ist durch eine vergrößerte Wandstärke ein einwärts gerichtete Stützstruktur 12a gebildet, die bei dieser Ausführungsform die Gestalt eines Ringwulstes aufweist. Der Innendurchmesser der Stützstruktur ist auch bei dieser Ausführungsform geringfügig größer als der Außendurchmesser des Bolzens.

Diese Rolle erfüllte dieselbe Funktion wie die Rolle des Umlenkbeschlages gemäß der ersten Ausführungsform. Die Stützstruktur kann in Anlage an den Bolzen gelangen, wodurch ein Teil der auf die Rolle einwirkenden Belastung direkt auf den Bolzen übertragen wird und eine übermäßige Verformung der Rolle verhindert ist. Der Vorteil dieser Gestaltung der Rolle gegenüber der Rolle gemäß der ersten Ausführungsform liegt in einer Einsparung von Material bei der Herstellung der Rolle.

Bei den in den Figuren dargestellten Ausführungsformen sind die axialen Enden der Rolle derart über die Wälzlager hinausgeführt, daß sie zusammen mit den Schenkeln des Umlenkbeschlages eine Spaltdichtung ausbilden. Dies verhindert das Eintreten von Staub und Schmutz in das Innere der Rolle und somit in die Wälzlager, was die Leichtgängigkeit der Wälzlager über einen langen Zeitraum hinaus gewährleistet. Zur weiteren Verbesserung der Leichtgängigkeit können abgedichtete Wälzlager verwendet werden, bei denen der Einfluß von Staub und Schmutz der Umgebung auf die Leichtgängigkeit weiter vermindert ist.

Bei beiden Ausführungsformen des dargestellten Umlenkbeschlages ist schließlich die Rolle auf dem Außenumfang mit in Umfangsrichtung verlaufenden Rillen versehen, durch die die Außenkontur der Rolle im Querschnitt einen wellenförmigen Verlauf erhält. Da bei der Verwendung des Sicherheitsgurtes dieser nicht senkrecht, sondern schräg zur Längsachse der Rolle über diese läuft, hat das Gurtband das Bestreben, je nach der Bewegungsrichtung des Gurtbandes über die Rolle in der einen oder der anderen Richtung auf der Rolle zu wandern. Dadurch kann das Gurtband auf feststehende Teile des Umlenkbeschlages auflaufen, was die Leichtgängigkeit des Gurtbandes beeinträchtigt. Durch die auf dem Außenumfang der Rolle ausgebildeten Rillen wird das Bestreben des Gurtbandes zum Wandern auf der Rolle vermindert, was ebenfalls zur hohen Leichtgängigkeit des über die Rolle laufendes Gurtbandes beiträgt.

Dem Bestreben des Gurtbandes zum Wandern auf der Rolle 12 kann auch mit einer Gestaltung des Außenumfangs der Rolle 12 entgegengewirkt werden, wie sie in Fig. 3 gezeigt ist. In dieser Figur ist eine Variante der Ausführungsform des Umlenkbeschlags von Fig. 2 dargestellt, bei der die Außenfläche der Rolle im Längsschnitt konkav gestaltet ist. Alternativ kann die Außenfläche der Rolle 12 im Längsschnitt auch konvex gestaltet sein.

## Patentansprüche

1. Umlenkbeschlag für Sicherheitsgurte, mit einem Bügel (10), der zwei parallele Schenkel (10a, 10b) aufweist, zwischen denen sich ein Bolzen (14) erstreckt, auf dem eine Rolle (12) durch an ihren axialen Enden angeordnete Wälzlager (16) drehbar gelagert ist, dadurch gekennzeichnet, daß die Rolle zwischen den Wälzlagern (16) wenigstens eine durch eine vergrößerte Wandstärke gebildete, einwärts gerichtete Stützstruktur (12a) aufweist.

2. Umlenkbeschlag nach Anspruch 1, dadurch gekennzeichnet, daß der Innendurchmesser der Rolle (12) von den Wälzlagern (16) zu der Stützstruktur (12a) hin im wesentlichen kontinuierlich abnimmt.

3. Umlenkbeschlag nach Anspruch 1, dadurch gekennzeichnet, daß die Stützstruktur (12a) durch wenigstens einen von der hülsenförmigen Rolle (12) einwärts ragenden Ringwulst gebildet ist.

4. Umlenkbeschlag nach einem der vorhergehenden Ansprüche, dadurch gekennzeichnet, daß auf dem Außenumfang der Rolle (12) in Umfangsrichtung verlaufende Rillen ausgebildet sind.

5. Umlenkbeschlag nach einem der vorhergehenden Ansprüche, dadurch gekennzeichnet, daß die Außenumfangsfläche der Rolle (12) im Längsschnitt konkav ist.

6. Umlenkbeschlag nach einem der Ansprüche 1 bis 4, dadurch gekennzeichnet, daß die Außenumfangsfläche der Rolle (12) im Längsschnitt konvex ist.

7. Umlenkbeschlag nach einem der vorhergehenden Ansprüche, dadurch gekennzeichnet, daß die axialen Enden der Rolle (12) derart über die Walzlager (16) hinausragen, daß sie zusammen mit den Schenkeln (10a, 10b) eine Spaltdichtung bilden.

## Claims

1. A deflector fitting for safety belts, comprising a stirrup shaped member (10) provided with two parallel limbs (10a, 10b), a pin (14) extending between the limbs, and a roller (12) which is rotatably mounted on the pin by means of low-friction bearings (16) arranged at the axial ends of the roller, characterized in that between the low-friction bearings (16) the roller has at least one inwardly directed support structure (12a) constituted by an increased wall thickness.

2. The deflector fitting as claimed in claim 1, characterized in that the internal diameter of the roller (12) decreases substantially continuously from the low-friction bearings (16) towards the support structure (12a).

3. The deflector fitting as claimed in claim 1, characterized in that the support structure (12a) is constituted by at least one annular bead projecting inwardly from the sleeve-like roller (12).

4. The deflector fitting as claimed in any one of the preceding claims, characterized by grooves formed in the outer periphery of the roller (12) and extending in the peripheral direction.

5. The deflector fitting as claimed in any one of the preceding claims, characterized in that the roller (12) is provided with an outer peripheral surface which, when viewed in a longitudinal cross section, is concave.

6. The deflector fitting as claimed in any one of claims 1 to 4, characterized in that the roller (12) is provided with an outer peripheral surface which, when viewed in a longitudinal cross section, is convex.

7. The deflector fitting as claimed in any one of the preceding claims, characterized in that the axial ends of the roller (12) project over the low-friction bearings (16) such that together with the limbs (10a, 10b) a seal with narrow gaps is constituted.

## Revendications

1. Ferrure de renvoi pour ceintures de sécurité, comprenant un étrier (10) qui comporte deux branches parallèles (10a, 10b) entre lesquelles s'étend un axe (14) sur lequel un cylindre (12) est monté avec possibilité de rotation par l'intermédiaire de roulements (16) disposés à ses extrémités axiales, caractérisée en ce que, entre les roulements (16), le cylindre comporte au moins une structure d'appui (12a) formée par une épaisseur de paroi accrue et dirigée vers l'intérieur.

2. Ferrure de renvoi selon la revendication 1, caractérisée en ce que le diamètre intérieur du cylindre (12) diminue de manière sensiblement continue depuis les roulements (16) vers la structure d'appui (12a).

3. Ferrure de renvoi selon la revendication 1, caractérisée en ce que la structure d'appui (12a) est formée par au moins un bourrelet annulaire qui fait saillie vers l'intérieur à partir du cylindre (12) en forme de douille.

4. Ferrure de renvoi selon l'une des revendications précédentes, caractérisée en ce que des stries s'étendant dans la direction circonférentielle sont prévues sur la périphérie extérieure du cylindre (12).

5. Ferrure de renvoi selon l'une des revendications précédentes, caractérisée en ce qu'en coupe longitudinale la surface périphérique extérieure du cylindre (12) est concave.

6. Ferrure de renvoi selon l'une des revendications 1 à 4, caractérisée en ce qu'en coupe longitudinale la surface périphérique extérieure du cylindre (12) est convexe.

7. Ferrure de renvoi selon l'une des revendications précédentes, caractérisée en ce que les extrémités axiales du cylindre (12) dépassent des roulements (16) de façon à former, conjointement avec les branches (10a, 10b), un joint à labyrinthe.
